# EUROPEAN PATENT APPLICATION

(11) **EP 4 269 165 A2**
(43) Date of publication of application: **01.11.2023**
(21) Application number: 23194582.5
(22) Date of filing: 31.08.2023
(51) Int. Cl.: B60L 53/16, B60L 53/30

(54) **CHARGING PILE AND CHARGING ASSEMBLY**

(30) Priority: 22.12.2022 CN 202223446768 U
(71) Applicant: FJ Dynamics Co., Ltd., Shenzhen, Guangdong 518000 (CN)
(72) Inventor: WANG, XUESONG, Shenzhen, 518000 (CN); WANG, YICHENG, Shenzhen, 518000 (CN); WU, QING, Shenzhen, 518000 (CN); Wu, Di, Shenzhen, 518000 (CN); ZHOU, JIE, Shenzhen, 518000 (CN)
(74) Representative: Zaboliene, Reda

(57) **Abstract**

Disclosed relate to agricultural machinery technology, a charging pile and a charging assembly are provided, the charging pile includes a holder, a pair of electric pile plates, a first cleaning piece, and a connector; the electric pile plates are arranged on the holder and configured to be connected to a pair of charging plates of a charging object for charging the charging object; the first cleaning piece is slidably connected to the holder; the connector is fixedly connected to the first cleaning piece; when the charging object contacts the charging pile, the charging object is connected to the connector, the connector drives the first cleaning piece to slide to clean the electric pile plates, when the charging object separates from the charging pile, the connector drives the first cleaning piece to reset.

## Description

### TECHNICAL FIELD

The present disclosure relates to agricultural machinery technology, in particular to a charging pile and a charging assembly.

### BACKGROUND

With widespread uses of material pushing robots, labor forces of farmers have been greatly liberated. In a relative art, the material pushing robot is usually equipped with a charging pile and generally uses automatic charging for charging. When the material pushing robot needs to be charged, the material pushing robot will move to the charging pile by itself and connect its own charging plate and an electric pile plate of the charging pile, to form a closed-loop charging electric current transmission path to complete automatic charging.

During long-term use, sundries is usually attached to a surface of the electric pile plate. When the charging plate is connected to the electric pile plate, the sundries may block the electric current transmission and cause charging failure. Therefore, there is an urgent need for a charging pile and a charging assembly to solve the above technical problems.

### SUMMARY OF THE INVENTION

One of the main advantages of the present disclosure is to provide a charging pile for cleaning sundries on a surface of the electric pile plates.

On one hand of the present disclosure, a charging pile is provided, the charging pile includes:
a holder;
a pair of electric pile plates arranged on the holder, the pair of electric pile plates configured to be connected to a pair of charging plates of a charging object for charging the charging object;
a first cleaning piece slidably connected to the holder; and
a connector fixedly connected to the first cleaning piece;
when the charging object contacts the charging pile, the charging object is connected to the connector, the connector is capable of driving the first cleaning piece to slide to clean the pair of electric pile plates, when the charging object separates from the charging pile, the connector is capable of driving the first cleaning piece to reset.

According to an embodiment of the present disclosure, the charging pile further includes:
a slide frame, the pair of electric pile plates arranged in the slide frame;
a moving assembly arranged between the slide frame and the holder; and
an elastic assembly arranged between the slide frame and the holder, the elastic assembly configured to provide a force for the slide frame moving towards a middle area of the holder;
when the charging object contacts the charging pile, the slide frame is capable of sliding on the holder through the moving assembly, to make the pair of electric pile plates be aligned with and connected to the pair of charging plates.

According to an embodiment of the present disclosure, the charging pile further includes a second cleaning piece arranged in the slide frame, the second cleaning piece is configured to clean the pair of charging plates.

According to an embodiment of the present disclosure, the moving assembly further includes:
a slide bar secured on the holder; and
a slide piece arranged on the slide bar, the slide piece is secured to the slide frame.

According to an embodiment of the present disclosure, the elastic assembly includes two springs arranged on the slide bar, the slide piece is positioned between the two springs.

According to an embodiment of the present disclosure, the holder includes a support platform, the moving assembly is arranged on the support platform, a rear end of the slide frame is connected to the moving assembly, a front end of the slide frame includes balls contacted with the support platform.

According to an embodiment of the present disclosure, the second cleaning piece and the electric pile plates are orderly arranged along a direction from the front end to the rear end of the slide frame.

According to an embodiment of the present disclosure, the connector is a magnetic piece, the connector is capable of being in magnetic connection with the charging object.

According to an embodiment of the present disclosure, the charging pile further includes a mounting board, the first cleaning piece and the connector arranged on the mounting board; and a plurality of wheels arranged on opposite ends of the mounting board.

According to an embodiment of the present disclosure, the holder includes:
a support board;
two support bars arranged on opposite edges of the support board; and
two limiting boards arranged on each of the two support bars;
a moving slot is formed between the two limiting boards, the plurality of wheels is arranged in the moving slot of each of the two support bars.

According to an embodiment of the present disclosure, each of the two support bars defines a strip hole, the plurality of wheels and the mounting board are connected by passing through the strip holes.

On another hand of the present disclosure, a charging assembly is provided, the charging assembly includes a charging structure and the charging pile according to any one of the embodiments, the charging structure is arranged in the charging object, the charging structure comprises a charging carrier and the pair of charging plates, the pair of charging plates are arranged on the charging carrier.

According to an embodiment of the present disclosure, the charging pile further includes a slide frame, the pair of electric pile plates is arranged in the slide frame; the charging structure further includes a guide assembly connected to the charging carrier, the guide assembly is configured to guide a moving of the slide frame, to make the pair of electric pile plates be aligned with and connected to the pair of charging plates.

According to an embodiment of the present disclosure, the front end of the slide frame is wedge-shaped, the guide assembly includes two guideposts arranged on two opposite sides of the charging carrier, the slide frame is arranged between the two guideposts.

According to an embodiment of the present disclosure, the charging structure further includes a connecting piece arranged on the charging carrier, the connecting piece is configured to be magnetically connected to the connector.

According to an embodiment of the present disclosure, advantageous effect of the charging pile may include when the charging object needs to be charged, the charging object moves toward the charging pile, and then the electric pile plates move toward the electric pile for connecting, during the electric pile plates are moving, the charging object is connected to the connector, the connector drives the first cleaning piece to slide through the electric pile plates, so as to clean the electric pile plates. After the sundries on the surface of the electric pile plates is cleaned, the electric pile plates and the connector of the electric pile are electrically connected, which effectively ensures that the electric pile plates and the connector of the electric pile are in good contact, and then ensures the current transmission between the electric pile plates and the connector, and completes the charging for the charging object. In addition, when the charging object is charged, the charging object moves away from the charging pile, and then the electric pile plates moves away from the connector, so the electric pile plates are disconnected from the connector, during the electric pile plates are moving away from the connector, the charging object drives the connector to reset and then separates from the electric pile plates, so that the electric pile plates can be electrically connected to the connector of the electric pile again.

According to an embodiment of the present disclosure, advantageous effect of the charging assembly may include: during the connecting of the electric pile plates and the connector, it can automatically clean up the sundries of the surface of the electric pile plates, effectively ensuring the successful connecting of the electric pile plates and the connector.

### BRIEF DESCRIPTION OF THE DRAWINGS

FIG. 1 is a schematic diagram of a charging assembly before connected according to an embodiment of the present disclosure.
FIG. 2 is a schematic diagram of the charging assembly before connected in another view.
FIG. 3 is a schematic diagram of the charging assembly during connecting according to an embodiment of the present disclosure.
FIG. 4 is a schematic diagram of the charging assembly after connected according to an embodiment of the present disclosure.
FIG. 5 is a partial schematic diagram of the charging assembly according to an embodiment of the present disclosure.
FIG. 6 is a schematic diagram of a charging pile of the charging assembly according to an embodiment of the present disclosure.

### DETAILED DESCRIPTION

The following description is used to disclose the present disclosure so that those skilled in the art can implement the present disclosure. The preferred embodiments in the following description are only examples, and those skilled in the art can think of other obvious variations. The basic principles of the present disclosure defined in the following description can be applied to other embodiments, modifications, improvements, equivalents, and other technical solutions that do not depart from the spirit and scope of the present disclosure.

Those skilled in the art should understand that, in the disclosure of the present disclosure, the terms "longitudinal", "lateral", "upper", "lower", "front", "rear", "left", "right", the orientation or positional relationship indicated by "vertical", "horizontal", "top", "bottom", "inner", "outer", etc. are based on the orientation or positional relationship shown in the drawings, which is only for the convenience of describing the present disclosure and to simplify the description, rather than indicating or implying that the device or element referred to must have a specific orientation, or be constructed and operated in a specific orientation, so the above terms should not be understood as limiting the present disclosure.

It can be understood that the term "a" should be understood as "at least one" or "one or more", that is, in one embodiment, the number of an element may be one, and in another embodiment, the number of the elements can be more than one, and the term "one" cannot be taken as a restriction on the number.

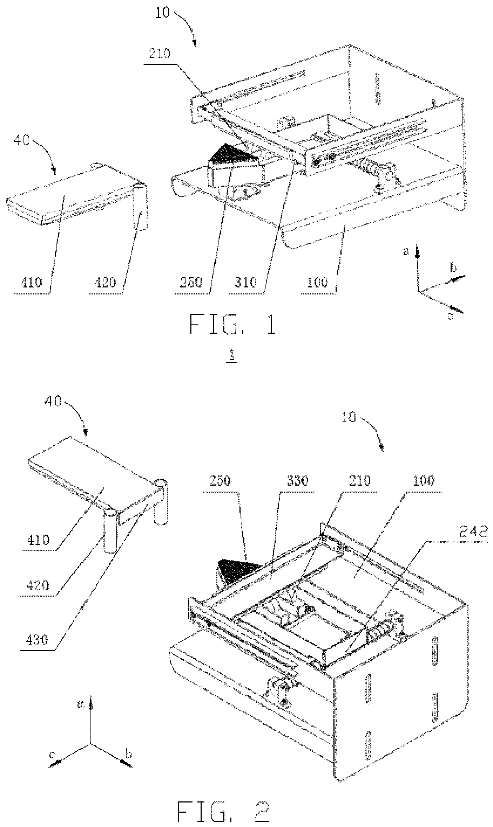

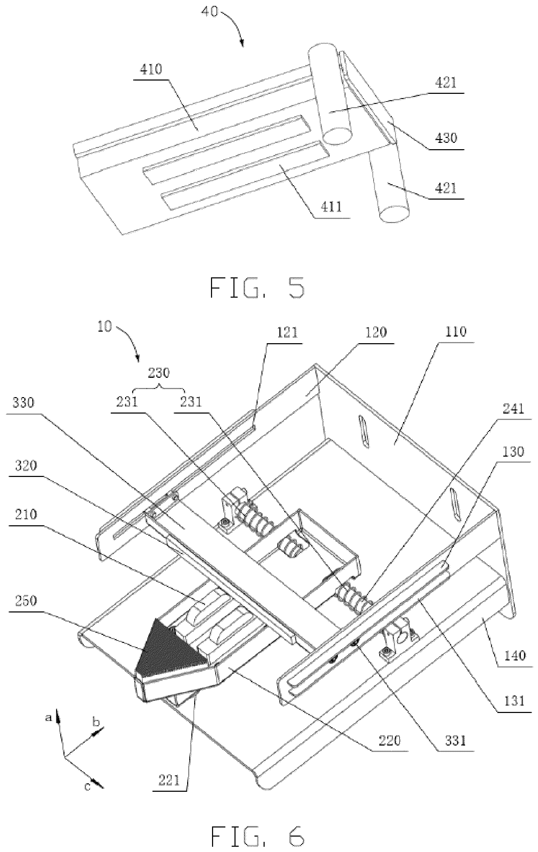

Referring to FIG. 1 to FIG. 6 of the accompanying drawings of the specification of the present disclosure, a charging assembly 1 according to an embodiment of the present disclosure are explained in the following description, the charging assembly 1 includes a charging structure 40 and a charging pile 10, the charging structure 40 is arranged in a changing object (not shown). It should be known that, the charging structure 40 may be a part of the changing object. The charging structure 40 includes a charging carrier 410 and a pair of charging plates 411 arranged on the charging carrier 410. In at least one embodiment, the changing object includes but is not limited to a robot. Preferably, the changing object may be a material pushing robot, the changing object may be connected to the charging pile 10 through the charging plates 411 for charging.

In detail, the charging pile 10 includes a holder 100, a pair of electric pile plates 210, a first cleaning piece 310, and a connector 320. The electric pile plates 210 are arranged on the holder 100, the electric pile plates 210 are configured to be connected to the charging plates 411 for charging the changing object. The first cleaning piece 310 is slidably connected to the holder 100. The connector 320 is fixedly connected to the first cleaning piece 310. When the changing object contacts the charging pile 10, the changing object is connected to the connector 320, the connector 320 may drive the first cleaning piece 310 to slide to clean the electric pile plates 210. During the changing object disconnects from the charging pile 10, the connector 320 may drive the first cleaning piece 310 to slide reset.

In at least one embodiment, during the electric pile plates 210 connecting to the charging plates 411, sundries on a surface of the electric pile plates 210 may be automatically clean, so the connection of the electric pile plates 210 and the charging plates 411 can be effectively ensured. In detail, when the changing object needs to be charged, the changing object moves towards the charging pile 10, the charging plates 411 are connected to the electric pile plates 210, during the connecting of the charging plates 411 and the electric pile plates 210, the changing object is connected to the connector 320, the connector 320 drives the first cleaning piece 310 to slide to clean the electric pile plates 210, after the sundries on the surface of the electric pile plates 210 are cleaned, the charging plates 411 and the electric pile plates 210 are in electrically connection, the contact between the charging plates 411 and the electric pile plates 210 may be effectively ensured, the electric current transmission between the charging plates 411 and the electric pile plates 210 may be ensured, the charging object can be charged, as well as the electric pile plates 210 can be cleaned without manual operations, which is saving time and human labor. In addition, after the charging object is charged, the charging object may move away from the charging pile 10, so the charging plates 411 disconnects from the electric pile plates 210, during the disconnecting of the charging plates 411 and the electric pile plates 210, the charging object drives the connector 320 to reset and disconnect from the connector 320, so the charging plates 411 and the electric pile plates 210 can be conveniently reconnected.

In detail, the first cleaning piece 310 may be a brush and/or a scraper, which have a great cleaning effect to the sundries on the surface of the electric pile plates. In other embodiments, the first cleaning piece 310 may be other elements, which is not limited by the present disclosure.

In detail, when the charging plates 411 are connecting the electric pile plates 210, the charging plates 411 are above the electric pile plates 210 in a vertical direction, each of the charging plates 411 can be connected to corresponding electric pile plates 210. Preferably, a quantity of each of the electric pile plates 210 and the charging plates 411 may be two.

Referring to FIGS, 1, 2, and 6, an "a" direction shown in the figures may be a vertical direction. Furthermore, a direction of the charging structure 40 moving towards the charging pile 10 may be a "b" direction shown in the figures, that is a first horizontal direction. A "c" direction shown in the figures may be a second horizontal direction. The first horizontal direction is perpendicular to the second horizontal direction.

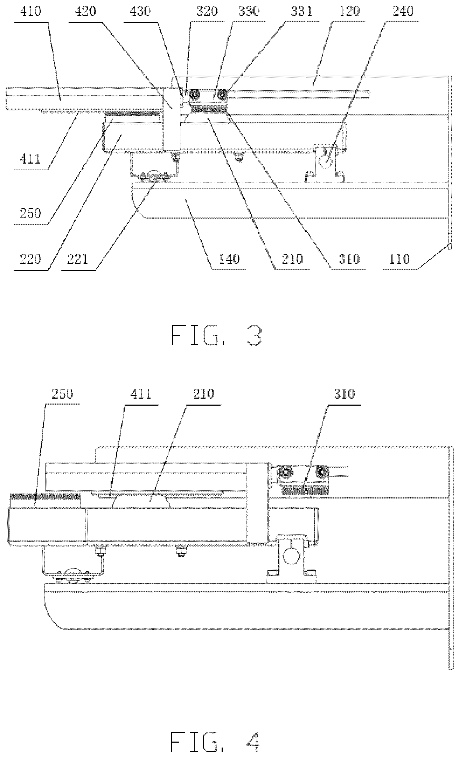

In at least one embodiment, referring to FIGS. 3, 4, 5, and 6, the charging pile 10 may further include a mounting board 330. The first cleaning piece 310 and the connector 320 are arranged on the mounting board 330. The mounting board 330 is slidably connected to the holder 100.

In detail, the holder 100 includes a support board 110. Two support bars 120 are arranged on two opposite edges of the support board 110. Two limiting boards 130 are arranged on each of the support bars 120. A moving slot 131 is formed between the two limiting boards 130. A plurality of wheels 331 are arranged on each of the two limiting boards 130, the wheels 331 are arranged on sides of the limiting boards 130 facing the moving slot 131. In at least one embodiment, the limiting boards 130 are configured to limit and support the wheels 331, the wheels 331 is capable of rolling in the moving slot 131, so the mounting board 330 may move relative to the holder 100, the wheels 331 may ensure the mounting board 330 can move stably along the first horizontal direction. In at least one embodiment, the first cleaning piece 310 is arranged under the mounting board 330 for conveniently cleaning the electric pile plates 210.

Furthermore, the support board 110 extends along the vertical direction and is configured to be connected to a wall or post, so the electric pile plates 210 have a match height with the charging plates 411.

Furthermore, the support bars 120 extend along the first horizontal direction, the mounting board 330 is positioned on an inner side of the support bars 120, the limiting boards 130 are positioned on an outer side of the support bars 120. Each of the support bars 120 defines a strip hole 121 along the first horizontal direction, the wheels 331 and the mounting board 330 may be connected to securing pieces by passing through the strip holes 121, the securing pieces may be nails or other pieces, which are not limited by the present disclosure. In at least one embodiment, the securing pieces may be engaged with the strip holes 121, after the charging object drives the mounting board 330 to reset, the securing pieces may be against to an inner surface of an end of the strip holes 121 that opposites to the support board 110, so as to prevent the mounting board 330 from continuously moving along together with the charging plates 411, and the charging plates 411 separating from the connector 320.

In at least one embodiment, referring to FIGS. 3, 4, 5, and 6, the charging pile 10 further includes a slide frame 220, a moving assembly 240, and an elastic assembly 230. The slide frame 220 encloses the electric pile plates 210, the moving assembly 240 is arranged between the slide frame 220 and the holder 100, the elastic assembly 230 is arranged between the slide frame 220 and the holder 100, the elastic assembly 230 is configured to provide a force for the slide frame 220 moving towards a middle area of the holder 100. When the charging object contacts the charging pile 10, the slide frame 220 may slide on the holder 100 through the moving assembly 240, so the electric pile plates 210 may aligned with and be connected to the charging plates 411.

In at least one embodiment, during the charging object is moving towards the charging pile 10, the charging plates 411 and the electric pile plates 210 may be mismatched along the first horizontal direction, the slide frame 220 moves along the second horizontal direction through the moving assembly 240, to correct the mismatch between the charging plates 411 and the electric pile plates 210, so the charging plates 411 may be preciously connected to the electric pile plates 210 with high success rates, not any extra apposition devices are needed, which may save time and operating processes. In addition, during the charging plates 411 is separating from the electric pile plates 210, under an acting of the elastic assembly 230, the slide frame 220 moves to the middle area of the holder 100 along the second horizontal direction, which provides a convenient for a next time connection of the charging plates 411.

Furthermore, the charging structure 40 further includes a guide assembly 420 connected to the charging carrier 410, the guide assembly 420 is configured to guide the moving of the slide frame 220, to let the charging plates 411 aligned with and connected to the electric pile plates 210, which is convenient.

In detail, a front end of the slide frame 220 may be wedge-shaped. The guide assembly 420 includes two guideposts 421 arranged on two opposite sides of the charging carrier 410, the slide frame 220 may be arranged between the two guideposts 421. The front end of the slide frame 220 may be an end of the slide frame 220 that opposite to the support board 110 along the first horizontal direction. In at least one embodiment, in the situation of the mismatch between the charging plates 411 and the electric pile plates 210 along the first horizontal direction, during the charging object is moving towards the electric pile plates 210, one of the guideposts 421 is against to the wedge-shaped front end of the slide frame 220, so as to drive the slide frame 220 to move along the second horizontal direction, until the guidepost 421 passes through the wedge-shaped front end of the slide frame 220, thus to correct the mismatch between the charging plates 411 and the electric pile plates 210 along the first horizontal direction. Certainly, the guide assembly 420 may further include other elements, which is not limited by the present disclosure.

In detail, the holder 100 includes a support platform 140. The moving assembly 240 is arranged on the support platform 140, a rear end of the slide frame 220 is connected to the moving assembly 240, the front end of the slide frame 220 includes balls 221 contacted with the support platform 140, which may effectively ensure the stable of the slide frame 220 on the support platform 140, ensure the stably connection of the charging plates 411 and the electric pile plates 210, and effectively prevent situations of any non-smoothly moving of the slide frame 220.

In detail, the support platform 140 extends along the horizontal direction, the support platform 140 is secured to the support board 110. Furthermore, the support platform 140 is positioned below the support bars 120.

In detail, the moving assembly 240 includes a slide bar 241 and a slide piece 242. The slide bar 241 is secured to the holder 100, the slide piece 242 is arranged on the slide bar 241, the slide piece 242 is secured to the slide frame 220, which is a simple and stable structure and provides a guide for the slide frame 220. Furthermore, the slide bar 241 is secured on the support platform 140 and extends along the second horizontal direction. In at least one embodiment, the slide piece 242 includes but is not limited to slide bearing and hollow pipe. Certainly, the moving assembly 240 may be sliding rail-sliding block assembly or other moving assembly, which is not limited by the present disclosure.

In detail, the elastic assembly 230 includes two springs 231 arranged on the slide bar 241. The slide piece 242 is positioned between the two springs 231. The two springs 231 may effectively ensure the slide frame 220 is stably positioned in the middle area of the support platform 140 along the second horizontal direction. Certainly, the elastic assembly 230 may be a damper or other elastic assembly, which is not limited by the present disclosure.

In at least one embodiment, referring to FIGS. 3, 4, 5, and 6, the connector 320 may be a magnetic piece, the connector 320 may be in magnetic connection with the charging object. In detail, the connector 320 may be arranged on a side of the mounting board 330 that opposite to the support board 110 along the first horizontal direction, which may be convenient for magnetically connecting to the charging object. Furthermore, a connecting piece 430 is arranged on the charging carrier 410, which may be magnetically connected to the connector 320. In at least one embodiment, during the charging object is moving towards the charging pile 10, the connecting piece 430 contacts magnetically connects to the connector 320, so the charging object can drive the mounting board 330 to operate advance and return movements along the first horizontal direction.

In detail, the connecting piece 430 is arranged on an end of the charging carrier 410 facing the charging pile 10 along the first horizontal direction.

Preferably, both the connector 320 and the connecting piece 430 are magnets. Certainly, both the connector 320 and the connecting piece 430 may also be electromagnetic coils or other magnet pieces, which are not limited by the present disclosure.

In at least one embodiment, referring to FIGS. 3, 4, 5, and 6, a second cleaning piece 250 is arranged in the slide frame 220. The second cleaning piece 250 is configured to clean the charging plates 411 of the charging object. In at least one embodiment, during the charging object is moving towards the charging pile 10, the charging plates 411 may pass by the second cleaning piece 250, so the second cleaning piece 250 may clean the charging plates 411, which can ensure the good contact between the charging plates 411 and the electric pile plates 210.

In detail, the second cleaning piece 250 and the electric pile plates 210 may be orderly arranged along a direction from the front end to the rear end of the slide frame 220, the rear end of the slide frame 220 may be an end of the slide frame 220 facing the support board 110 along the first horizontal direction.

In detail, the second cleaning piece 250 may be a brush and/or a scraper. In other embodiments, the second cleaning piece 250 may be other elements, which is not limited by the present disclosure.

Those skilled in the art should understand that the above description and the embodiments of the present disclosure shown in the drawings are only examples and do not limit the present disclosure. The purpose of the present disclosure has been completely and effectively achieved. The functions and structural principles of the present disclosure have been shown and explained in the embodiments. Without departing from the principles, the implementation of the present disclosure may have any deformation or modification.

## Claims

1. A charging pile (10), comprising:
a holder (100);
a pair of electric pile plates (210) arranged on the holder (100), the pair of electric pile plates (210) configured to be connected to a pair of charging plates (411) of a charging object for charging the charging object;
a first cleaning piece (310) slidably connected to the holder (100); and
a connector (320) fixedly connected to the first cleaning piece (310);
wherein when the charging object contacts the charging pile (10), the charging object is connected to the connector (320), the connector (320) is capable of driving the first cleaning piece (310) to slide to clean the pair of electric pile plates (210), when the charging object separates from the charging pile (10), the connector (320) is capable of driving the first cleaning piece (310) to reset.

2. The charging pile (10) according to claim 1, further comprising:
a slide frame (220), the pair of electric pile plates (210) arranged in the slide frame (220);
a moving assembly (240) arranged between the slide frame (220) and the holder (100); and
an elastic assembly (230) arranged between the slide frame (220) and the holder (100), the elastic assembly (230) configured to provide a force for the slide frame (220) moving towards a middle area of the holder (100);
wherein when the charging object contacts the charging pile (10), the slide frame (220) is capable of sliding on the holder (100) through the moving assembly (240), to make the pair of electric pile plates (210) be aligned with and connected to the pair of charging plates (411).

3. The charging pile (10) according to claim 2, further comprising:
a second cleaning piece (250) arranged in the slide frame (220), the second cleaning piece (250) configured to clean the pair of charging plates (411).

4. The charging pile (10) according to claim 2, wherein the moving assembly (240) further comprises:
a slide bar (241) secured on the holder (100); and
a slide piece (242) arranged on the slide bar (241), the slide piece (242) is secured to the slide frame (220).

5. The charging pile (10) according to claim 4, wherein the elastic assembly (230) comprises two springs (231) arranged on the slide bar (241), the slide piece (242) is positioned between the two springs (231).

6. The charging pile (10) according to claim 3, wherein the holder (100) comprises a support platform (140), the moving assembly (240) is arranged on the support platform (140), a rear end of the slide frame (220) is connected to the moving assembly (240), a front end of the slide frame (220) comprises balls (221) contacted with the support platform (140).

7. The charging pile (10) according to claim 6, wherein the second cleaning piece (250) and the electric pile plates (210) are orderly arranged along a direction from the front end to the rear end of the slide frame (220).

8. The charging pile (10) according to claim 1, wherein the connector (320) is a magnetic piece, the connector (320) is capable of being in magnetic connection with the charging object.

9. The charging pile (10) according to claim 1, further comprising:
a mounting board (330), the first cleaning piece (310) and the connector (320) arranged on the mounting board (330); and
a plurality of wheels (331) arranged on opposite ends of the mounting board (330).

10. The charging pile (10) according to claim 9, wherein the holder (100) comprises:
a support board (110);
two support bars (120) arranged on opposite edges of the support board (110); and
two limiting boards (130) arranged on each of the two support bars (120);
a moving slot (131) is formed between the two limiting boards (130), the plurality of wheels (331) is arranged in the moving slot (131) of each of the two support bars (120).

11. The charging pile (10) according to claim 10, wherein each of the two support bars (120) defines a strip hole (121), the plurality of wheels (331) and the mounting board (330) are connected by passing through the strip holes (121).

12. A charging assembly (1) comprising a charging structure (40) and the charging pile (10) according to any one of claims 1 to 11, wherein the charging structure (40) is arranged in the charging object, the charging structure (40) comprises a charging carrier (410) and the pair of charging plates (411), the pair of charging plates (411) are arranged on the charging carrier (410).

13. The charging assembly (1) according to claim 12, wherein the charging pile (10) further comprises:
a slide frame (220), the pair of electric pile plates (210) is arranged in the slide frame (220);
the charging structure (40) further comprises a guide assembly (420) connected to the charging carrier (410), the guide assembly (420) is configured to guide a moving of the slide frame (220), to make the pair of electric pile plates (210) be aligned with and connected to the pair of charging plates (411).

14. The charging assembly (1) according to claim 13, wherein the front end of the slide frame (220) is wedge-shaped, the guide assembly (420) comprises two guideposts (421) arranged on two opposite sides of the charging carrier (410), the slide frame (220) is arranged between the two guideposts (421).

15. The charging assembly (1) according to claim 12, wherein the charging structure (40) further comprises a connecting piece (430) arranged on the charging carrier (410), the connecting piece (430) is configured to be magnetically connected to the connector (320).
